# EUROPÄISCHE PATENTANMELDUNG

(11) **EP 2 522 244 A1**
(43) Veröffentlichungstag der Anmeldung: **14.11.2012**
(21) Anmeldenummer: 11165907.4
(22) Anmeldetag: 12.05.2011
(51) Int. Cl.: A45C 9/00, A45C 5/14

(54) **Koffer**

(71) Anmelder: Aga, Akram, 1230 Wien (AT); Kakoschky, Patric, 47805 Krefeld (DE)
(72) Erfinder: Aga, Akram, 1230 Wien (AT); Kakoschky, Patric, 47805 Krefeld (DE)
(74) Vertreter: DR. STARK & PARTNER

(57) **Zusammenfassung**

Die Erfindung betrifft einen Koffer (1), mit einer in etwa flachen quaderförmigen Ausgestaltung, welche gegenüberliegende Seitenteile (2) und umlaufende Kantenflächen (3) umfasst, wobei die Kantenflächen (3) eine Oberseite (3a) mit Tragegriff (4) sowie eine gegenüberliegende Unterseite (3b), und eine vorderseitige sowie eine gegenüberliegende rückseitige Seitenfläche (3c,3d) beinhalten, wobei der Koffer (1) mit wenigstens drei Rollen (5) versehen ist, und zwei Rollen (5) miteinander fluchtende Drehachsen haben.
Um Strecken mit Gepäck und Kind vereinfacht bewältigen zu können, sollen die Rollen (5) an einem ersten der beiden Seitenteile (2) derart vorgesehen sein, dass der Koffer (1) flach auf diesem Seitenteil (2) liegend rollen kann, und dass dem zweiten der beiden Seitenteile (2) eine insbesondere als Stützfläche ausgebildete Stütze (6) zugeordnet ist, die zwischen einer ersten, parallel zur Ebene dieses Seitenteils (2) ausgerichteten Position, und einer zweiten, in einem rechten oder stumpfen Winkel zu diesem Seitenteil (2) ausgerichteten Nutzposition, verschwenkbar ausgebildet ist und zusammen mit diesem Seitenteil (2) einen Sitz für eine auf dem Koffer (1) zu transportierende kleine Person bildet.

## Beschreibung

Die Erfindung betrifft einen Koffer, insbesondere Reisekoffer, mit einer in etwa flachen quaderförmigen Ausgestaltung, welche die beiden gegenüberliegenden Seitenteile und die umlaufenden Kantenflächen umfasst, wobei die Kantenflächen eine Oberseite mit einem Tragegriff sowie eine dieser gegenüberliegende Unterseite, die zumeist mit unterseitigen Standfüßen zum Abstellen des Koffers versehen ist, und eine vorderseitige sowie eine dieser gegenüberliegende rückseitige Seitenfläche beinhalten, wobei weiterhin der Koffer mit wenigstens drei Rollen versehen ist, von denen zwei Rollen miteinander fluchtende Drehachsen haben.

Aus der Praxis sind derartige Koffer bekannt, die beispielsweise als "Trolley" ausgebildet sind und damit über zwei Rollen an einem Kantenbereich sowie ein geradlinig ausziehbares starres Zugmittel an der gegenüberliegenden Kante desselben Seitenteils verfügen.

Auch sind Koffer bekannt, bei denen vier Rollen an einer der Kantenflächen vorgesehen sind. Diese Rollen sind dabei an einer zu Ihrer Drehachse orthogonal ausgerichteten, im "Fahrbetrieb" vertikal angeordneten Schwenkachse befestigt, so dass der Koffer frei nach Belieben in alle Richtungen verfahren werden kann.

Nachteilig hierbei ist, dass es bei reisenden Familien häufig zu Problemen kommt, wenn am Flughafen weitere Strecken zu Fuß bewältigt werden müssen und Kinder diese Strecken nicht laufen wollen.

Aufgabe der Erfindung ist es, die vorgenannten Nachteile zu vermeiden und eine Möglichkeit anzugeben, mit der die Bewältigung von Strecken mit Gepäck und Kind vereinfacht bzw. komfortabler gestaltet werden kann.

Diese Aufgabe wird dadurch gelöst, dass bei einem Koffer der eingangs genannten Art die Rollen an einem ersten der beiden Seitenteile derart vorgesehen sind, dass der Koffer flach auf diesem Seitenteil liegend rollen kann, und dass dem zweiten der beiden Seitenteile eine insbesondere als Stützfläche ausgebildete Stütze zugeordnet ist, die zwischen einer ersten, parallel zur Ebene dieses Seitenteils ausgerichteten Position, und einer zweiten, in einem rechten oder stumpfen Winkel zu diesem Seitenteil ausgerichteten Nutzposition, verschwenkbar ausgebildet ist und zusammen mit diesem Seitenteil einen Sitz für eine auf dem Koffer zu transportierende, insbesondere kleine, Person bildet.

Hierdurch kann beispielsweise ein Kind auf dem Seitenteil des Koffers Platz nehmen und sich an der Stützfläche anlehnen. Aufgrund der Rollen kann der Koffer mit dem darauf sitzenden Kind dann verfahren werden.

Hierzu kann erfindungsgemäß ein Zugmittel, das insbesondere aus dem Koffer ausziehbar ausgebildet sein kann und vorzugsweise die Form eines Zuggriffes haben kann, vorgesehen sein, so dass der Koffer leicht gezogen werden kann.

Vorzugsweise kann das aus dem Koffer ausziehbare Zugmittel, vorzugsweise der Zuggriff, starr ausgebildet und mit einem Knickgelenk zum Aufwärtsschwenken bei liegendem Koffer versehen sein, so dass so dass der Koffer leicht gezogen bzw. ggf. auch geschoben werden kann.

Erfindungsgemäß kann das Zugmittel, welches insbesondere aus dem Koffer ausziehbar und vorzugsweise in Form eines Zuggriffes ausgebildet sein kann, an einem Seitenteil, insbesondere an demselben Seitenteil wie die Stütze, angeordnet sein, so dass der Höhenunterschied bis zur Hand einer den Koffer ziehenden Person möglichst gering ist.

Bei einem bevorzugten Ausführungsbeispiel der Erfindung kann das Zugmittel als U-förmiger Bügel ausgebildet sein, dessen Abmaße in etwa, insbesondere genau, diesem Seitenteil entsprechen, wobei das Zugmittel mit den freien Enden der Schenkel des Bügels an den Eckpunkten desselben Seitenteils wie die Stütze gelenkig angeschlagen ist und bei Nichtgebrauch an dieses Seitenteil herangeklappt werden kann.

Dabei kann dieses Seitenteil mit entsprechenden Vertiefungen für eine in der Oberfläche des Seitenteils versenkte Anordnung des Bügels in eingeklappten Zustand versehen ist, so dass der Bügel bei Nichtgebrauch nicht oder aber nur unwesentlich gegenüber der Oberfläche des Seitenteils, an dem er angeordnet ist, hervorsteht. Hierdurch wird neben einer aufgeräumten Optik auch vermieden, dass der Koffer aufgrund vorstehender Teile irgendwo hängen blieben kann und dass man sich an solchen vorstehenden Teilen verletzen kann.

Vorzugsweise kann die Stütze abnehmbar sein und lösbar an dem Koffer angeordnet sein, so dass sie bei voraussichtlichem Nichtgebrauch, beispielsweise bei einer Reise ohne Kinderbegleitung, von vorneherein entfernt und nicht mitgeführt werden kann, wodurch das Gewicht des Koffers reduziert wird

Vorteilhafterweise kann insoweit auch die Stütze bei Nichtgebrauch derart flach am Koffer anliegen, dass sie nicht oder aber nur unwesentlich gegenüber der Oberfläche des Seitenteils, an dem sie angeordnet ist, hervorsteht.

Weiterhin kann die Schwenkachse der Stütze im Bereich der Kante zwischen Seitenteil und rückwärtiger Seitenfläche vorgesehen sein, so dass der durch die Stütze gebildete Sitz möglichst am äußersten Rand des Seitenteils des Koffers vorgesehen ist.

Bei einem bevorzugten Ausführungsbeispiel der Erfindung kann die Stütze als U-förmiger Bügel ausgebildet ist, wobei die Stützfläche mit den freien Enden der Schenkel des Bügels im Bereich der Kante zwischen Seitenteils und rückwärtiger Seitenfläche gelenkig angeschlagen ist und bei Nichtgebrauch an dieses Seitenteil herangeklappt werden kann. Dabei kann der durch den Bügel eingeschlossene Freiraum durch eine insbesondere textile Bespannung geschlossen sein und/oder der Bügel kann mit einer Polsterung versehen sein.

Vorzugsweise können der Stütze seitlich vorgesehene Führungselemente, insbesondere flächig ausgebildete Rückenlehnenwangen, zugeordnet sein, wobei diese vorteilhafterweise faltbar ausgebildet sein können, so dass die Stützfläche zusammen mit den Führungselementen bei Nichtgebrauch flach zusammenlegbar ist.

Erfindungsgemäß kann dem zweiten der beiden Seitenteile ein Sitzelement, insbesondere eine gepolsterte Sitzfläche, zugeordnet sein, so dass eine auf dem Koffer sitzende Person keinen direkten Kontakt mit dem Seitenteil hat, was sowohl bei einem angeschmutzten Seitenteil als auch bei einem metallischen Material, beispielsweise bei einem Aluminiumkoffer, wenig angenehm wäre.

Bei einem bevorzugten Ausführungsbeispiel der Erfindung können die Stütze und das Sitzelement als eine miteinander verbundene Funktionseinheit ausgebildet sein, so dass beispielsweise die Stütze über die Befestigung der Sitzfläche an dem entsprechenden Seitenteil des Koffers angebracht ist und sich an diesem abstützt.

Dabei kann die Funktionseinheit mittels an dem Koffer angebrachter Schienen durch Einschieben entsprechender vorspringender Teilbereiche der Funktionseinheit in diese Schienen an dem Koffer lösbar befestigbar ausgebildet sein, so dass eine leicht und ohne Werkzeug herstellbare Befestigung möglich ist.

Vorteilhafterweise kann der Stütze eine Rückhalteeinrichtung für eine dagegen lehnende Person, insbesondere in Form eines Gurtes, wie Z. B. eines Beckengurtes, eines 3-Punkt-Gurtes oder eines Hosenträger-Gurtes, zugeordnet sein, so dass ein sicheres Sitzen auch bei müden Personen oder aber eher "gehetzter Fahrweise" gewährleistet ist.

Im Folgenden wird ein in der Zeichnung dargestelltes Ausführungsbeispiel der Erfindung erläutert. Es zeigen:
- Fig. 1: eine perspektivische Ansicht eines erfindungsgemäßen Koffers in flach liegender Ausrichtung mit ausgeklapptem Zugmittel, und
- Fig. 2: eine perspektivische Ansicht eines erfindungsgemäßen Koffers in flach liegender Ausrichtung mit ausgeklapptem Zugmittel und mit hochgeklappter Stütze.

In allen Figuren werden für gleiche bzw. gleichartige Bauteile übereinstimmende Bezugszeichen verwendet.

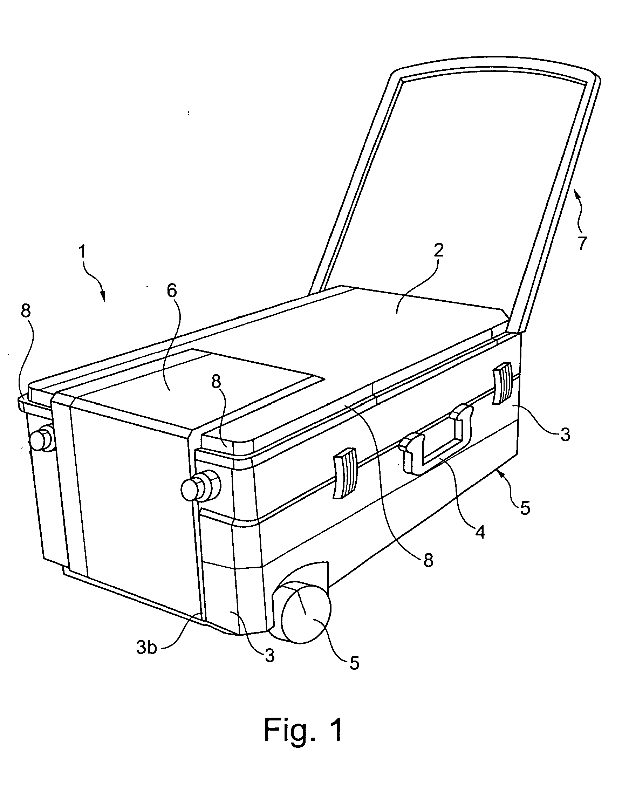

Fig. 1 zeigt einen Koffer 1, insbesondere Reisekoffer, der eine flache Ausgestaltung aufweist. Insoweit ist der Koffer 1 mit zwei gegenüberliegenden Seitenteile 2 und umlaufenden Kantenflächen 3 versehen. Dabei ist eine Kantenfläche 3 bei stehender Ausrichtung des Koffers 3 als Oberseite 3a mit einem ersten Tragegriff 4 sowie die ihr gegenüberliegende Kantenfläche 3 als Unterseite 3b, die mit unterseitigen Standfüßen 11 zum Abstellen des Koffers 1 versehen ist, ausgebildet. Die beiden anderen Kantenflächen 3 sind als Seitenflächen 3c, d ausgebildet, von denen eine einen Tragegriff 4 aufweist.

Das bei flach liegender Ausrichtung des Koffers 1 unterseitige Seitenteil 2 ist mit drei Rollen 5 versehen, von denen zwei Rollen 5 miteinander fluchtende Drehachsen haben und an der hinteren Kante der unteren Seitenteil 2 angeordnet sind. Die weitere, dritte Rolle 5 ist in den Zeichnung nicht sichtbar und ist derart vorgesehen, dass der Koffer 1 flach liegend rollen kann. Insoweit ist die dritte Rolle mittig im vorderen Bereich des unteren Seitenteils 2, insbesondere an der vorderen Kante der unteren Seitenteils 2, angeordnet.

Weiterhin ist an dem bei flach liegender Ausrichtung des Koffers 1 oberseitigen Seitenteil 2 eine als Stützfläche ausgebildete Stütze 6 angeordnet ist, die zwischen einer ersten, parallel zur Ebene dieses Seitenteils 2 ausgerichteten Position bei Nichtgebrauch und einer zweiten, in einem rechten oder stumpfen Winkel zu diesem Seitenteil 2 ausgerichteten Nutzposition, verschwenkbar ausgebildet ist. Die Stütze 6 bildet zusammen mit diesem Seitenteil 2 einen Sitz für eine auf dem Koffer 1 zu transportierende, insbesondere kleine, Person. Hierdurch kann ein Kind auf dem Seitenteil 2 des Koffers 1 sitzen sich an der Stütze anlehnen, wobei der Koffer 1 durch die unterseitigen Rollen 5 dann mit dem darauf sitzenden Kind verfahren werden kann. Die Schwenkachse der Stütze 6 ist im Bereich der Kante zwischen Seitenteil 2 und Unterseite 3b vorgesehen, wodurch der von der Stütze 6 gebildete Sitz am Rand des Seitenteils 2 des Koffers 1 angeordnet ist.

Hierzu ist ein Zugmittel 7 vorgesehen, welches an demselben Seitenteil 2 wie die Stütze 6 angeordnet ist. Das Zugmittel 7 ist dabei als U-förmiger Bügel ausgebildet, dessen Abmaße diesem Seitenteil 2 entsprechen, wobei das Zugmittel 7 mit den freien Enden der Schenkel seines Bügels an Eckpunkten dieses Seitenteils 2 gelenkig angeschlagen ist und bei Nichtgebrauch an dieses Seitenteil 2 herangeklappt werden kann. Vorliegend ist der Bügel im Bereich der Kante zwischen Seitenteil und Oberseite 3a an denjenigen Eckpunkten des Seitenteils 2 gelenkig angeschlagen, welche gegenüberliegend zu der Anbringung der Stütze 6 sind.

Dabei ist dieses Seitenteil 2 mit entsprechenden Vertiefungen oder ausgesparten Freiräumen 8 für eine in oder an der Oberfläche des Seitenteils 2 versenkte Anordnung des Bügels im eingeklappten Zustand bei Nichtgebrauch versehen.

Sowohl die Stütze 6 als auch das Zugmittel 7 liegen bei Nichtgebrauch derart flach am Koffer 1 an, dass sie nicht oder aber nur unwesentlich gegenüber der Oberfläche des Seitenteils 2, an dem sie angeordnet sind, hervorstehen.

Weiterhin ist ein Befestigungselement 9 vorgesehen, das mit der Stütze 6 verbunden und somit als Funktionseinheit ausgebildet ist. Damit ist die Stütze 6 über die Befestigung des Befestigungselements 9 an dem Seitenteil 2 des Koffers 1 anbringbar und stützt sich somit an diesem ab.

Für die Anbringung der Funktionseinheit an dem Koffer 1 sind in der Zeichnung nicht dargestellte Schienen an der Unterseite 3b, alternativ auch an dem Seitenteil 2, vorgesehen, so dass durch Einschieben entsprechender vorspringender Teilbereiche der Funktionseinheit in diese Schienen die Funktionseinheit an dem Koffer 1 lösbar befestigbar ist.

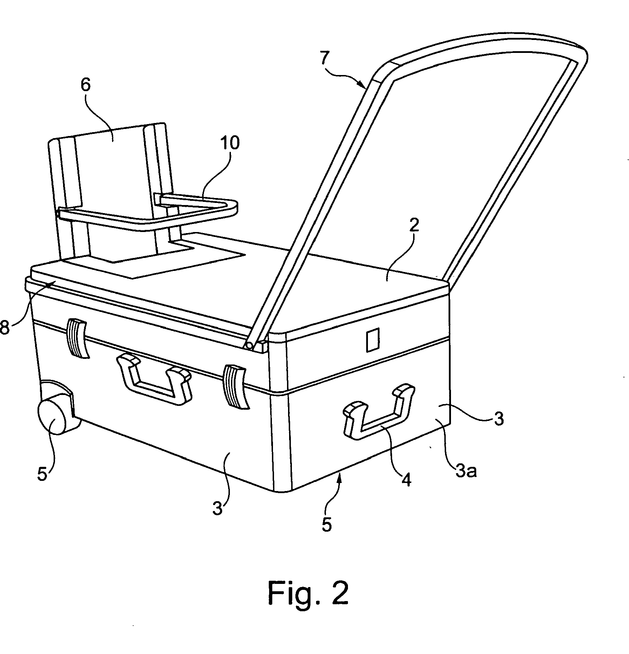

Wie aus Fig. 2 ersichtlich, ist die Stütze 6 mit einer Rückhalteeinrichtung 10 für eine Person versehen, die vorliegend als klappbarer Haltebügel ausgebildet ist. Damit ist auch ein sicheres Sitzen bei müden Personen oder aber forcierter Fortbewegung gewährleistet.

## Patentansprüche

1. Koffer (1), insbesondere Reisekoffer, mit einer in etwa flachen quaderförmigen Ausgestaltung, welche die beiden gegenüberliegenden Seitenteile (2) und die umlaufenden Kantenflächen (3) umfasst, wobei die Kantenflächen (3) eine Oberseite (3a) mit einem Tragegriff (4) sowie eine dieser gegenüberliegende Unterseite (3b), die zumeist mit unterseitigen Standfüßen (11) zum Abstellen des Koffers (1) versehen ist, und eine vorderseitige sowie eine dieser gegenüberliegende rückseitige Seitenfläche (3c, 3d) beinhalten, wobei weiterhin der Koffer (1) mit wenigstens drei Rollen (5) versehen ist, von denen zwei Rollen (2) miteinander fluchtende Drehachsen haben, **dadurch gekennzeichnet, dass** die Rollen (5) an einem ersten der beiden Seitenteile (2) derart vorgesehen sind, dass der Koffer (1) flach auf diesem Seitenteil (2) liegend rollen kann, und dass dem zweiten der beiden Seitenteile (2) eine insbesondere als Stützfläche ausgebildete Stütze (6) zugeordnet ist, die zwischen einer ersten, parallel zur Ebene dieses Seitenteils (2) ausgerichteten Position, und einer zweiten, in einem rechten oder stumpfen Winkel zu diesem Seitenteil (2) ausgerichteten Nutzposition, verschwenkbar ausgebildet ist und zusammen mit diesem Seitenteil (2) einen Sitz für eine auf dem Koffer (1) zu transportierende, insbesondere kleine, Person bildet.

2. Koffer (1) nach dem vorhergehenden Anspruch, **dadurch gekennzeichnet, dass** ein, insbesondere aus dem Koffer (1) ausziehbares, Zugmittel (7), vorzugsweise in Form eines Zuggriffes, vorgesehen ist.

3. Koffer (1) nach dem vorhergehenden Anspruch, **dadurch gekennzeichnet, dass** das aus dem Koffer (1) ausziehbare Zugmittel (7), vorzugsweise der Zuggriff, starr ausgebildet und mit einem Knickgelenk zum Aufwärtsschwenken bei liegendem Koffer (1) versehen ist.

4. Koffer (1) nach einem der Ansprüche 2 oder 3, **dadurch gekennzeichnet, dass** das, insbesondere aus dem Koffer (1) ausziehbare und vorzugsweise in Form eines Zuggriffes ausgebildete, Zugmittel (7) an einem Seitenteil (2), insbesondere an demselben Seitenteil (2) wie die Stütze (6), angeordnet ist.

5. Koffer (1) nach einem der Ansprüche 2 oder 3, **dadurch gekennzeichnet, dass** das Zugmittel (7) als U-förmiger Bügel ausgebildet ist, dessen Abmaße in etwa, insbesondere genau, diesem Seitenteil (2) entsprechen, wobei das Zugmittel (7) mit den freien Enden der Schenkel des Bügels an den Eckpunkten desselben Seitenteils (2) wie die Stütze (6) gelenkig angeschlagen ist und bei Nichtgebrauch an dieses Seitenteil (2) herangeklappt werden kann.

6. Koffer (1) nach dem vorhergehenden Anspruch, **dadurch gekennzeichnet, dass** dieses Seitenteil (2) mit entsprechenden Vertiefungen (8) für eine in der Oberfläche des Seitenteils (2) versenkte Anordnung des Bügels in eingeklappten Zustand versehen ist.

7. Koffer (1) nach einem der vorhergehenden Ansprüche, **dadurch gekennzeichnet, dass** die Stütze (6) abnehmbar ist und lösbar an dem Koffer (1) angeordnet ist, insbesondere in Schienen an dem Seitenteil (2) einschiebbar an dem Koffer (1) befestigbar ist.

8. Koffer (1) nach einem der vorhergehenden Ansprüche, **dadurch gekennzeichnet, dass** die Stütze bei Nichtgebrauch derart flach am Koffer (1) anliegt, dass sie nicht oder aber nur unwesentlich gegenüber der Oberfläche des Seitenteils des Koffer (1)s, an dem sie angeordnet ist, hervorsteht.

9. Koffer (1) nach einem der vorhergehenden Ansprüche, **dadurch gekennzeichnet, dass** die Schwenkachse der Stütze im Bereich der Kante zwischen Seitenteil und rückwärtiger Seitenfläche vorgesehen ist.

10. Koffer (1) nach einem der vorhergehenden Ansprüche, **dadurch gekennzeichnet, dass** die Stütze als U-förmiger Bügel ausgebildet ist, wobei die Stütze mit den freien Enden der Schenkel des Bügels im Bereich der Kante zwischen Seitenteils und rückwärtiger Seitenfläche gelenkig angeschlagen ist und bei Nichtgebrauch an dieses Seitenteil herangeklappt werden kann.

11. Koffer (1) nach einem der vorhergehenden Ansprüche, **dadurch gekennzeichnet, dass** der Stütze seitlich vorgesehene Führungselemente, insbesondere flächig ausgebildete Rückenlehnenwangen, zugeordnet sind.

12. Koffer (1) nach einem der vorhergehenden Ansprüche, **dadurch gekennzeichnet, dass** dem zweiten der beiden Seitenteile ein Sitzelement, insbesondere eine gepolsterte Sitzfläche, zugeordnet ist bzw. der Unterseite ein Befestigungselement zugeordnet ist.

13. Koffer (1) nach dem vorhergehenden Anspruch, **dadurch gekennzeichnet, dass** die Stütze und das Sitzelement bzw. die Stütze und das Befestigungselement als eine miteinander verbundene Funktionseinheit ausgebildet sind.

14. Koffer (1) nach dem vorhergehenden Anspruch, **dadurch gekennzeichnet, dass** die Funktionseinheit mittels an dem Koffer (1) angebrachter Schienen durch Einschieben entsprechender vorspringender Teilbereiche der Funktionseinheit in diese Schienen an dem Koffer (1) lösbar befestigbar ausgebildet ist.

15. Koffer (1) nach einem der vorhergehenden Ansprüche, **dadurch gekennzeichnet, dass** der Stütze (6) eine Rückhalteeinrichtung (10) für eine dagegen lehnende Person, insbesondere in Form eines Gurtes, wie Z. B. eines Beckengurtes, eines 3-Punkt-Gurtes oder eines Hosenträger-Gurtes, zugeordnet ist.
